# EUROPEAN PATENT SPECIFICATION

(11) **EP 2 801 440 B1**
(45) Date of publication and mention of the grant of the patent: **27.07.2016**
(21) Application number: 14166868.1
(22) Date of filing: 02.05.2014
(51) Int. Cl.: B24B 13/005, B24B 9/14

(54) **Multimaterial block piece and process using such a block piece**
Aus mehreren Materialien bestehendes Blockstück und Verfahren zu dessen Verwendung
Pièce de blocage à multiples materiaux et procédé utilisant la pièce de blocage

(30) Priority: 06.05.2013 LU 92191
(43) Date of publication of application: 12.11.2014
(73) Proprietor: Satisloh AG, 6340 Baar (CH)
(72) Inventor: Savoie, Marc, 35578 Wetzlar (DE)
(74) Representative: Sonnenberg, Fred

(56) References cited:
- WO-A1-03/018253
- WO-A1-2005/018919
- DE-A1- 2 619 985

## Description

### TECHNICAL FIELD OF THE INVENTION

The present invention generally relates to a workpiece support block ("block piece") for supporting an optical workpiece during the processing thereof. In particular, the invention relates to a block piece for holding a spectacle lens for processing thereof, as used in prescription workshops in masses, that is to say production workshops for manufacturing individual spectacle lenses from customary materials (mineral glass, polycarbonate, PMMA, CR 39, HI index, etc.) according to a prescription. The invention also concerns a method for manufacturing spectacle lenses according to a prescription, as outlined in the preamble portion of claim 20.

### BACKGROUND OF THE INVENTION AND PRIOR ART

An ophthalmic lens blank generally has a first face with a predetermined curvature and a second face, opposite the first face on which a desired surface contour is generated by a machining process. The overall process is generally referred to as "lens surfacing" and the overall object is to yield a finished spectacle lens so that the first and second face curvatures cooperate to yield desired optical properties. In addition to this the first and/or second faces of the lens are usually coated to provide the finished spectacle lens with an enhanced ability to resist scratching (by means of a "hard coating"), with a low residual reflection and a desired color (by means of an "antireflection coating"), and/or with certain surface properties such as hydrophobic, oleophobic and dust repelling properties (by means of a "top coating"). Usually also a further machining process takes place (the so-called "edging"), the aim of which is to finish-machine the edge of the spectacle lens in such a way that the spectacle lens may be inserted into a spectacle frame. In all these process steps the spectacle lens (blank) must somehow be held in the machining machine(s) and coating apparatus respectively.

In more detail, hitherto the following main process steps are usually carried out in prescription workshops: Firstly, a suitable right and/or left ophthalmic lens blank is removed from a semifinished product store. The term "semifinished" is used to mean that the spectacle lens blanks, which are usually round or oval in plan view and have not yet been edged, have already been molded, machined or in another way contoured (surfaced) on one of their two optically active faces only. The spectacle lens blanks are then prepared for the blocking operation, namely by applying a suitable protective film or a suitable protective lacquer to protect the optically active face which has already been machined or contoured, i.e. the first face or blocking face.

The so-called "blocking" of the ophthalmic lens blanks then takes place. During this, the spectacle lens blank is joined to a suitable block piece, for example a lens block according to German standard DIN 58766 or document EP 1 593 458 A2 forming the preamble portion of claim 1. To this end, the block piece is firstly brought into a predefined position with respect to the protected first face of the spectacle lens blank, and then in this position the space between block piece and spectacle lens blank is filled with a molten material (normally a metal alloy or wax) or an adhesive composition that is curable, e.g., by UV or visible light, as described in the earlier European patent application 07 013 158.6 by the same applicant for instance. Once this material has solidified or cured, the block piece forms a holder or support for machining the second face of the spectacle lens blank. The block piece is grasped by a chuck or other suitable coupling means during lens generation to provide in particular secure mounting to the profiling machine while avoiding damage to the lens.

Lens surfacing is carried out then using profiling machines which typically have a cutter of some type that is moved across the second face of the ophthalmic lens blank to give the second face its macrogeometry according to the prescription. The spectacle lens blank may be stationary or rotating during the cutting operation, depending on the particular profiling generator (which is) being used. Typical machining processes for surfacing spectacle lenses include single point diamond turning (as the presently preferred fine cutting process for plastic materials and described in, e.g., document EP 1 719 585 A2 by the same applicant), diamond tool fly-cutting, milling (as the presently preferred rough cutting process for plastic materials and described in, e.g., document EP 0 758 571 A1 by the same applicant), and grinding processes, applied depending on the lens material.

Usually fine machining of the ophthalmic lenses then takes place, in which the premachined second face of the respective spectacle lens blank is given the desired microgeometry, as described, e.g., in documents EP 1 473 116 A1 and EP 1 698 432 A2 by the same applicant. Depending on inter alia the material of the spectacle lenses, the fine machining process is divided into a fine grinding operation and a subsequent polishing operation, or includes only a polishing operation if a polishable second face has already been produced during the pre-machining stage.

Only after the polishing operation is the ophthalmic lens blank separated from the lens block ("deblocking") before cleaning steps are carried out. Then the coating process(es) take(s) place that, depending on among other things the material of the lens blank, may include spin (or dip) coating of the deblocked spectacle lens blank so as to provide at least the second face of the lens blank with a hard coating or the like, as described, e.g., in the earlier U.S. patent application SN 11/502,306 , wherein the spectacle lens blank is held in the spin coating apparatus by means of a lens holder that has a suction cup for instance.

At any rate coating includes vacuum coating of the deblocked spectacle lens blank so as to provide at least the second face of the lens blank with an antireflection coating and optionally a top coating serving the above mentioned purpose(s). In the vacuum coating process the spectacle lens blank is clamped to a substrate carrier of a rotary carrier device that is located in a vacuum chamber in a vertically spaced relation with respect to an evaporation source for emitting a vapor stream onto the lens blank mounted on the substrate carrier, as described, e.g., in document EP 0 806 492 A1.

After the coating step(s) the ophthalmic lens blank usually is edged so that the spectacle lens can be inserted into a spectacle frame. To this end, the coated spectacle lens blank is blocked again, at this time however to a different, smaller block piece by means of an adhesive film portion for instance, as described, e.g., in document EP 1 243 381 A2 by the same applicant. The edging process may also include the forming of bores, grooves, channels and/or bevels corresponding to the respective mounting requirements in the edge area of the spectacle lens, as described, e.g., in document EP 1 243 380 A2 by the same applicant.

Finally, after edging and a further deblocking step the spectacle lens is cleaned again and ready for inspection and insertion into / mounting to the spectacle frame.

One disadvantage of the conventional overall process as outlined above consists in the fact that the spectacle lens blank needs to be deblocked after surfacing prior to coating, and then again blocked after coating prior to edging, for this requiring manual operations that are time-consuming, labor-intensive and add the risk to damage the lens.

In this connection, documents US 5 210 695 A and US 5 341 604 A disclose a system providing a lens blank and block assembly capable of being mounted in any of a surface generating machine, a finishing, i.e. lapping or polishing apparatus and an edging machine without requiring re-blocking of the lens in order to compensate for axis shifts, wherein the lens block is formed from a plastic material capable of being readily cut together with the lens blank in the edging machine. Document DE 26 19 985 A1 proposes an apparatus for attaching an optical lens in a grinding machine by a flexible lens block. The proposed lens blocks however are not intended or suitable to be used in coating processes, in particular vacuum coating processes.

In this regard, document WO 2007/017385 A2 proposes a block piece for holding an optical lens to be machined, with a coupling part for holding in a workpiece chuck and with a holding part for fastening the lens, the latter having a convex or concave holding surface corresponding to a first side of the lens, wherein the holding surface is, according to the shape of the lens to be held, provided in the form of a negative aspherical, toric, progressive or free-form surface, and the block piece is made from a plastic material that can be machined. Although this document generally mentions that the lens can remain on the block piece during a coating process, it does not disclose or address how this could be done in a vacuum coating process in which the lens is subjected to a vacuum of, e.g., 5*10<-3> mbar. It can be expected that liquids from the surfacing and cleaning processes will remain in particular in the "equalizing and pressure medium channels" provided in the proposed block piece, which liquids can excessively prolong the time required to reach, if at all, the necessary vacuum and in addition may lead to impure coating conditions resulting in an imperfect coating.

In this regard, document WO 2003/018253 A1 proposes an apparatus for deblocking a lens from a lens block in which a fluid passage is provided through the lens block to a lens mounting surface adjacent which the lens is mounted. A pressurized fluid is introduced to the fluid passage and transmitted thereby to an interface between a lens mounting adhesive and a lens mounting surface.

Another problem with the conventional overall process as outlined above is that, in particular if the block piece is made from a plastic material, and the block piece is supported in the surfacing machine(s) by means of a collet chuck or the like which applies a radial compression force thereon, the block piece may assume a shape other than that which it naturally assumes in the absence of these forces. Any such deformation is transferred to the spectacle lens blank blocked on the block piece so that the curve which is cut into the surface of the lens blank may become distorted when the block piece is removed from the chuck and the lens blank is deblocked from the block piece and resumes its natural shape. This problem becomes particularly acute in the manufacture of free-form spectacle lenses requiring very precise tolerances. Any slight distortion of the curve upon deblocking the spectacle lens from the block piece may take it out of the tolerance range of the particular prescription, thereby rendering it useless for its desired purpose and resulting in substantial waste. Finished ophthalmic lenses are generally very thin, flex easily and are thus prone to such deformations.

Still another problem with the conventional process in prescription workshops is associated with in particular the single point diamond turning as the presently preferred fine cutting process for spectacle lens blanks made from plastic materials. This surfacing process as such is susceptible to small, but unacceptable errors at the center of rotation of the lens blank that are typically caused by errors of machine and tool calibration, as explained in great detail in document EP 1 719 584 A1 by the same applicant. This, coupled to certain limitations of the subsequent (flexible) polishing process, where it can be difficult to totally "clean up" or remove such center errors, have led to certain limitations in the amount of prism (i.e. surface tilt or shift with respect to the axis of rotation) permissible to cut and polish in such combined surfacing process. Experiments have shown that it can be relatively easy to cut and polish surfaces having 2 to 3 degrees of prism at the center with accurate centers, however greater amounts of prism at the center can pose problems.

A known method (see, e.g., document US 6 913 356 B2) for fitting a block piece to a semifinished blank of an ophthalmic lens intended to have a particular prism generally consists of positioning the lens blank on a fixed base, in a centered and angularly defined manner, so that the finished face of the lens blank bears conjointly on a plurality of bearing points of the base, defining an orientation of the block piece relative to the lens blank, orienting the block piece in the defined manner, and fixing the block piece to the finished face while maintaining orientation, by means of a castable low melting point metal alloy as the blocking material.

Once the lens blank is blocked on the block piece with the predetermined amount of prism that the spectacle lens shall have after surfacing, there is no need to generate, i.e. cut any prism during the surfacing process. However, one disadvantage of this known approach consists in the fact that, if the lens blank is blocked with a greater amount of prism, say 7 or 8 degrees of prism, the thickness of the wedge-shaped layer of blocking material between lens blank and block piece strongly varies along the prism axis. This gives rise to a different amount of shrinkage of the blocking material in the thickness direction along the prism axis when it solidifies (or cures if an adhesive composition would be used), which shrinkage in turn may bend/distort (or even shift with respect to the block piece) the blocked lens blank - as described in the earlier European patent application 07 013 158.6 by the same applicant - so that, again, the curve which is cut into the surface of the lens blank may become distorted when the lens blank is deblocked from the block piece and resumes its natural shape. For this reason the amount of prism permissible to be blocked is also limited in the known approach.

In an attempt to render the block piece more universally usuable the applicant has previously suggested that the block piece should comprise a basic body that has a workpiece mounting face portion against which the workpiece can be blocked by means of a blocking material, and a clamping portion via which the workpiece blocked on the basic body can be fixed in a machine or apparatus for processing of the workpiece; wherein the basic body consists of mineral glass or a plastic material having particular degasing properties (EP2093018). In this application it is indicated to be favourable to have the block piece made of material transparent for UV or VIS. It is however also indicated that using either plastic material or mineral glass would have an inherent drawback, respectively with respect to the workability or the capacities to adequately support lenses to be worked.

### OBJECT OF THE INVENTION

The object of the present invention is to provide a block piece for holding an optical workpiece, in particular a spectacle lens, for processing thereof, which block piece serves to solve the drawbacks previously cited of the techniques known in the art and enables in particular spectacle lenses with high optical qualities to be produced more quickly and at lower cost, without restrictions as to the lens geometries usually processed in prescription workshops while allowing a universal use during the entire process that may include vacuum deposition, spin coating together with the usual lathing, grinding or milling = generating and polishing steps. The object of the invention further encompasses the provision of a method for manufacturing spectacle lenses using such a block piece. Obviously the block piece should preferably compatible with existing machining equipment.

### SUMMARY OF THE INVENTION

The above object is solved by a blocking piece having a workpiece mounting face portion for blocking a spectacle lens blank, the blocking piece comprising at least two materials having different rigidity, stiffness and/or hardness, wherein both materials are translucent and define an annular junction surface for one material with respect to the other material, wherein a first one of the at least two materials is formed to have an annular shape at least in part surrounding the second one of the at least two materials, so that the workpiece mounting face portion comprises a first surface having the first one of the material and a second surface having the second one of the material and defines a preconfigured undeformable shape for receiving said spectacle lens blank thereon.

Heretofore it was found to be possible to cope with the need in respect to the capability to provide for adequate support for effective working conditions by using grinding and milling in opting for a block piece of suitable material or in providing the block piece of a diameter smaller than the final product. Surprisingly it was now found possible to also do so by providing at least two materials having different rigidity, stiffness and/or hardness with at least one of the materials being translucent. Indeed the person skilled in the art knew about blocking pieces made of a rather hard clamping portion and a disc shaped lens support made of a soft alloy. Further translucent single material blocking pieces have been suggested as indicated above. With the exception of accessory elements such as screws, springs and the like heretofore a material mix using at least one translucent material has not been contemplated. Indeed several particularities rather hindered the person skilled in the art to do so. The pressure in having inexpensive blocking piece and the requirements in allowing the block piece to sustain the various mechanical constraints both in fixing the block piece versus the tool as well as during the different steps of lens processing were suggesting such an approach to be difficult if not impossible. The variety in lenses to be worked additionally requires particular attention, such as having various base curve block pieces. All those constraints could surprisingly been managed by providing an annular adjoining surface. Indeed the annular adjoining surface allows to have little negative impact upon rotation such as during spin coating while being suitable for the mechanical properties as required. Most astonishingly, it was found that the optical characterises are improved as well. Both irradiation for curing the adhesive as well as options to inspect/monitor the bonding and/or the actually worked lens can be improved in that the annular surface may optionally serve to focus and/or to scatter light. Hence the use of two different materials on the one side and the use of an annular adjoining surface on the other side result in a surprising synergetic effect.

Such a configuration, wherein one material is formed to have an annular shape at least in part surrounding the other material, allows for instance to arrange for a metal ring around a portion serving to be engaged by a collet chuck and or to have a ring element with particularly well suited material regarding workability at an outer edge. Of course a configuration of several concentric and/or parallel annular elements is conceivable as well.

Preferably both materials have different optical properties. Having different optical properties allows for generating an optical function at the adjoining surfaces without adding additional optical active elements such as reflective coatings or the like that would also be usable to enhance this kind of optical effect for improving illumination uniformity or nonuniformity as needed.

Preferably the blocking piece is void of non-translucent elements. The use of as many translucent as possible and in particular transparent elements - most preferably showing little absorption - allows to avoid shading of material to be cured and thus inappropriate blocking or local adhesion. This allows for most uniform curing, but at the same time also for optical or visual inspection of the bonding quality as well as with respect of the lens actually worked.

Preferably one or both materials have similar optical proprieties compared to the lens to be blocked. In opting for similar optical proprieties light diffraction ad the adjoin surface between the blocking piece and the lens to be worked, usually comprised of a more or less uniform and more or less thick adhesive layer can be set to particular needs or avoided. Indeed it might be interesting to have the assembly of the blocking piece with the lens bonded thereto to act as a well defined optical system such that the progress of the work can be followed easy using optical inspection or analysis of light transmitted through such an assembly. This can provide for an easy in-situ monitoring of the process. Another example would be a temperature monitoring during the process. Assuming that the resulting optical analysis such as diffraction of the obtained assembly is responsive to a temperature or a temperature gradient a monitored diffraction pattern could be used to ascertain the avoidance of overheating the lens during mechanical working thereof. Here any kind of optical analysis based on interference of deflection might be used as well.

In a particularly preferred embodiment the one material is fixedly attached, in particular embedded into the other material. Such a configuration allows to locally strengthen the blocking piece where high righty or support is needed whereas in other location an easy workability could be provided for. One example of such an embodiment could be to overmold a mineral glass ring with polymeric material so as to build the base body of the blocking piece. The connecting element might in such a configuration be an integral part of the mineral glass or fixedly attached thereto. Another example could consider an annular strengthening ring made for instance of a preferably polished or reflective metal ring surrounding e.g. an upper portion of the connecting portion or chucking portion of the blocking piece.

Alternatively or additionally the block piece may preferably comprise at least two elements loosely arranged before blocking. Such a configuration could allow for more ease in handling different base curves. A particularly preferred embodiment could provide an external ring made of one particular material adjoining a central portion of the blocking piece defining said adjoining annular surface. Such an embodiment is most cost efficient as the disposable or impaired part of the blocking piece during mechanical working can be produced at little costs. The two separate elements could be mutually engaged by a press fit or any kind of snap fit, however it is also possible that the two elements are unified by means of the adhesive and the lens blocked thereto.

Preferably at least the outer perimeter of the blocking device is made to conform in rigidity/stiffness/hardness the lens to be blocked. In using conforming materials the induced stresses due to mechanical working and temperature changes can be minimized.

A preferred blocking piece comprises radial extending zones of physical particularity, such as ribs. Those radial extending zones of physical particularity may serve various purposes such as taking the function of a light guide, a light kollimator, a light scattering element, a rigidifying rib and the like without nevertheless impairing the capability to be rotated at high speeds such as during a spin coating step.

In summary one aspect of the present invention is to provide a block piece for holding an optical workpiece, in particular a spectacle lens, for processing thereof, comprising a basic body that has a workpiece mounting face portion against which the workpiece can be blocked by means of a blocking material, and a clamping portion via which the workpiece blocked on the basic body can be fixed in a machine or apparatus for processing of the workpiece. The block piece may be comprised of mineral glass or a plastic material, while guaranteeing suitable optical and mechanical supporting properties in spite of respecting existing constraints in costs and workability so as to avoid undue use of machining tool. The invention provides for a block piece being adapted to be used as a universal holding element usable over the entire process and also allowing to be used in any kind of thin film coating processes.

The invention also provides for a method for manufacturing spectacle lenses according to a prescription, comprising the steps of: (i) blocking a lens blank with a blocking face on a workpiece mounting face portion of a block piece with the aid of a blocking material, the lens blank having a second face, opposite the blocking face, and an edge between the blocking face and the second face, (ii) processing the blocked lens blank on the second face and, if required, the edge to obtain a processed lens, and (iii) deblocking the processed lens from the block piece; wherein one and the same block piece as described above is used on which the blocked lens blank remains throughout step (ii).

Since the spectacle lens blank remains on the block piece throughout the whole processing step the latter can be carried out faster and more efficient with less handling effort as compared to the conventional approach where the lens blank needs to be deblocked and blocked again in the processing stage. This reduces the manufacturing costs and even allows for more automation in the prescription workshops. The approach according to the invention also serves to ensure the production of spectacle lenses with high optical qualities because one and the same geometrical relation between lens blank and block piece is maintained throughout the whole processing stage, thus any errors that are consequential on the conventional re-blocking approach where the orientation of the lens blank relative to the assigned different block pieces may unintentionally change upon re-blocking are avoided. Further, as the lens blank is always held on the block piece as standardized interface and handling means during the processing stage the risk that any operator unintentionally touches the lens blank - thereby possibly causing problems in a coating substep - is reduced. A further advantage consists in the fact that all production information can be kept on the block piece, for instance by means of a "transponder" integrated in or fixed to the block piece, as proposed in the generic document EP 1 593 458 A2 , which offers full tracking possibility throughout the whole process.

Continuing the concept of the invention, the above processing step (ii) may comprise the following substeps: machining of the blocked lens blank to give the second face a macrogeometry according to the prescription; fine machining of the blocked lens blank to give the second face the required microgeometry; cleaning the blocked lens blank that has been machined and fine machined; if required, spin or dip coating of the blocked lens blank in order to provide the second face with a hard coating, or a primer, or a primer and a hard coating; vacuum coating of the blocked lens blank to provide an antireflection coating and, if required, a top coating such as hydrophobic and/or oleophobic and/or dust repelling coating on the second face; and, if required, edging of the blocked lens blank to give the edge the required geometry so that the processed lens is ready for insertion into a spectacle frame or a spectacle holder. Since there is no deblocking step inbetween the aforementioned processing stages any more, some processing substeps could even be carried out in a - as compared to the conventional time sequence - different sequence where a certain fixed sequence is not necessary from a product point of view, in particular all machining operations including edging could be carried out prior to the coating process(es) if desired or required.

Finally, it is preferred for the blocking face of the lens blank to be fully finished prior to the above blocking step (i), including hard coating, antireflection coating and, if required, top coating such as hydrophobic and/or oleophobic and/or dust repelling coating. In this instance the blocked spectacle lens blank could advantageously be shipped from the lens manufacturer to the prescription workshop where only the second face and, if required, the edge of the lens blank would need to be processed to obtain a spectacle lens ready for insertion into / mounting to the spectacle frame, wherein the first face of the lens blank would be protected by the block piece until the finished spectacle lens is deblocked. This approach would also minimize the production efforts in the prescription workshop.

Further effects and advantages of the proposed block piece(s) and method for manufacturing spectacle lenses according to a prescription will become apparent to the skilled person from the following description of currently preferred examples of embodiment of the invention.

### BRIEF DESCRIPTION OF THE DRAWINGS

Herein below, the invention will be explained in more detail on the basis of preferred examples of embodiment and with reference to the appended, partially schematic drawings. In the drawings:
FIG. 1 shows schematically a first embodiment of the present invention, wherein the blocking piece is made of two distinct elements each comprised of a different material. The schematic illustrations show the assembly step at the finish block piece.
FIG. 2 shows a schematically sectional view of an example that does not form part of the invention but represents background art that is useful for understanding the invention, the example in Fig. 2 making use of an insert using one material, embedded into the other material.
FIG. 3 shows a second preferred embodiment in a bottom view, a sectional view, a side view and a perspective view.
FIG. 4 shows various views of a ring shaped element that could be integrated into the preferred embodiment as shown in FIG. 3.
FIG. 5 shows a third preferred embodiment in a sectional view together with a detail thereof and in a bottom view.
FIG. 6 shows a fourth preferred embodiment being a slight modification of the third preferred embodiment as illustrated in FIG 5.
FIG. 7 shows a flow chart of a lens machining process carried out using the block piece of the invention engaged with a standard interface of the machining tool as defined by German DIN 58766.

The preferred embodiment of the present invention will now be described in more detail, wherein it is to be noted that the following description is given for illustrative purposes, only and not with the intention to restrict the scope of protection to any of the illustrated and discussed preferred embodiments. In particular, the person skilled in the art will be well aware that any single feature described in detail with respect to one preferred embodiment could also be used separately from features described in the same embodiment or in combination with features of another embodiment. Furthermore, it should be understood that all given indicia as to material choices, sizes, measures and the like are as well to be considered as examples only, and if any of them would prove to be an essential feature again such feature should be considered as distinguishing if taken separetly or in conjunction with other features described herein, irrespective as to whether such feature combination is explicitely mentioned or rather obtainable by omitting one or more single/isolated feature(s) from any of the described embodiments.

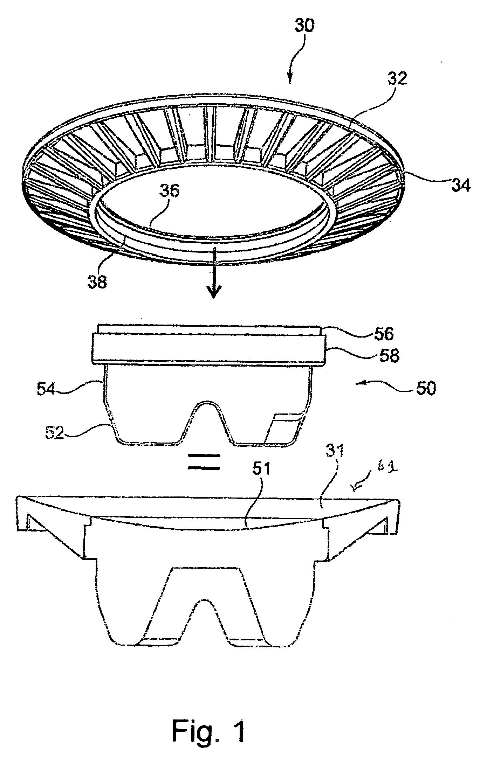

The first preferred embodiment as illustrated in FIG. 1 can be assembled by juxtaposing a basically ring shaped element 30 with a basically disk or block shaped element 50. By juxtaposing the two elements 30, 50 a blocking piece, basically in a shape as well known is obtained, wherein the respective top surfaces 31 and 51 do together provide for a workpiece mounting face portion 61 as the surface allowing to block a spectacle lens blank that is intended to be worked. The lower portion provides for a standard clamping portion via which the spectacle lens blank blocked on the blocking piece can be fixed in a machine or an apparatus for processing (i.e. surfacing, coating, edging; tinting, cleaning, etc. as the case may be) of the spectacle lens blank.

In the illustrated embodiment the element 50 is a glass block, e.g. made from mineral glas which is sufficiently stiff, rigid and hard in order to allow for engagement with a working machine such that the blocking piece satisfies to German standard DIN 58766. The glass block is showing comparatively little deformation and comprises on its bottom the well-known configuration with responding notches and cut-outs. In order to allow easy insertion and correct clamping the glass block is provided with a chamfer surface 52 and a cylindrical surface 54. In the upper area of the glass block there is provided a first annular surface 56 forming the edge with the concave or convex support surface 51. A little bit further downward a second annular surface 58 with slightly larger diameter is provided. As the person skilled in the art will appreciate the two annular surfaces 56 and 58 allow proper engagement with a ring shape element 30. The ring shape or annular element 30 is accordingly provided with a mating inner annular surface portion 38 and an annular protrusion 36. With both of said surfaces and the annular element 30 and the glass block 50 cooperating one can obtain a basically flush surface, that could be concave as in the illustrated embodiment, but as well convex in case needed. It is to be noted that the two surfaces 31 and 51 are comprised preferably of the same surface curvature. In other words the blocking surface is preferably having a constant radius and for practical reasons it has proven to be preferable of having several blocking pieces available with different surface radii, so as to be capable of supporting most intimately various lenses. The use of different base curves is well known for monomaterial block pieces, and hence this concept will not be detailed herein. Although in the illustrated embodiment the supporting surface is structured such that the surface 51 of the glass block and the surface 31 of the ring shaped part to commonly provide for the supporting surface with one single and particularly specified radius. One could also contemplate to use one glass block with a fixed radius in the medium range and to provide for the specific adaptation of the best radius suitable to support the lens blank by using different ring shaped elements 30, thus providing a block piece with adaptable base curve. It should further be noted that although in the illustrated embodiment only one single ring shaped or annular element is used an assembly using a plurality of concentric ring shaped elements is conceivable as well, the single elements could have identical or variable surface curvatures, e.g. increasing towards the perimeter of the block piece.

Coming back to the illustrated preferred embodiment of FIG. 1 the ring shaped or annular element 30 is presently made from a plastic material. The plastic material is preferably a plastic material that has proven to be useable in such processing, i.e. having little outgassing, being resistant to usually encounted processing temperatures, does not interfere with the material of the lens blank and thus allowing secure blocking and unblocking using the well-known bonding material etc.. The engagement of the annular or ring shaped plastic part with respect to the glass block can be provided by a mating form configuration as illustrated, but as well using a snap fit configuration (as will be discussed later) or also by providing a threaded configuration or the like. It is to be noted that it has been found to be preferable if the assembly does not use any bonding material except for the one that is used for adhering the lens blank to the upper surface.

The plastic ring shaped element can be produced at very low cost by means of for example injection moulding and the hardness of the annular plastic ring element allows for proper workability without undue tooling fatigue. The rigidity and/or stiffness of the annular part may be improved by using various ribs such as the ribs 34 illustrated in figure 1. The outer perimeter could comprise a rib defining rim 32 it is however to be noted that for a later processing of the lens blank it is most preferred that all rigidity providing or enhancing components do extend in a radial direction, only. In the specific case of the embodiment of figure 1 the outer rim 32 will disappear during the first edging step since the blocking piece is designed such that the lens blank to be worked will rest on the surfaces 31 and 51 forming a workpiece mounting face portion 61 in such a manner that the final lens would still be slightly larger in the radial extension than the glass block. As such the entire edging process can be performed such that the full working area of the lens blank is always supported by the annular element 30, without however performing the edging in such a way that the cutting, grinding or milling tool would interfere with the glass block.

As can be seen from the above the glass block, which of course could also be made from any other rigid or stiff and hard material can be reused and it is simply sufficient to replace the annular plastic ring part for each new lens block to be worked. The plastic annular or ring shaped element 30 presents a multitude of advantages versus the previously commonly used alloy disk. In particular there is among others no more need to thoroughly collect the grinding or milling residues since the plastic material is less harmful than the usually used alloy. The plastic material is also more competitive cost wise and the material mix, i. e. using a strong stiff and/or rigid center block part and a easily workable annular part allows a most optimized adaptation towards the need of tool engagement either with the machining chuck or with respect to the working tool.

The embodiment as shown in FIG. 1 has proven to be most suitable for blocking a lens blank using a photo curable bonding material or adhesive and therefore both the block element 50 as well as the annular element 30 are made of translucent material, in the present case those materials are both transparent thus allowing to transmit light trough the blocking piece and through the lens blank. The fact that the blocking piece is allowing light transmission, in particular for UV-light permits a most uniform curing over the entire surface 31 and 51. The transparency, but also translucent configuration allows for optical monitoring of the quality of the bonding between the blocking piece and the lens blank during the various processing steps. As an example the blocking piece with the fixed lens blank could be optically analysed by irradiating a particular pattern and monitoring said pattern after transmission through the assembly of the block piece and the lens blank.

An essential feature of the invention, that can be well understood when analysing the embodiment of figure 1 is the existence of annular adjoining surfaces such as the surfaces 38 and 58, mainly, but also 36 and 56. The surfaces 38 and 58 are adjoining radial or ring shaped surfaces that allow proper alignment of the two elements on the one hand and during blocking a little defined play and/or stress compensation in the axial direction while allowing at the same time a huge degree of design freedom as to the optical characteristics. In particular the adjoining ring shaped surfaces can be designed such the entire surface composed of the surfaces 31 and 51 be properly irradiated with UV-light for curing the adhesive. The person skilled in the art will realize that either or both of the surfaces 38 and 58 could be provided with a specific surface treatment or surface characteristic so as to allow to scatter the light in case needed or to focus the light in specifically desired areas. A further option could reside in the possibility to initiate the curing process in the center area or alternatively all to the contrary initiate the bonding process between the lens blank and the block piece on the periphery or as a further alternative to contemplate to have the bonding process to begin close to the adjoining area that would otherwise most likely considered to be shaded. The specific configuration according to the invention using an annular ring shaped adjoining surface configuration does indeed allow to take benefit both of the respective mechanical properties of the two materials but as well of the optical effect provided by the fact of using either materials having closely matched optical characteristics or alternatively different optical characteristics. In any case the person skilled in the art is provided with a ring shape optical element from which he can take benefit in conceiving the curing during blocking an unblocking but also for monitoring or inspection purposes.

Obviously the person skilled in the art can use most versatile designs. For example he could provide an alternating pattern of reflective element and non-reflective elements around the surface 58 such that light transmission in the radial direction is enhanced at location where the stiffening ribs 34 of the plastic ring shaped elements are provided such that those reinforcing ribs can provide for the double functionality to also act as a light guide.

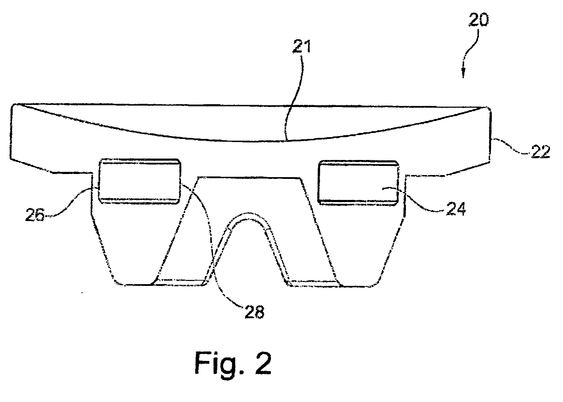

In FIG. 2 an example is shown that does not form part of the invention but represents background art that is useful for understanding the invention. The example is also relying on the beneficial effect of having two different materials provided in such a manner that they show an annular interface or junction surface. The annular shape of the junction as illustrated by reference signs 26 and 28 allows to compensate for differences in mechanical behaviour of the two materials, such as different thermal expansion or the like, can be helpful in adsorbing vibrations during the machining process of the lens blank and at the same time can provide an optical adaptive system for improving the blocking process if based on photo curable adhesives. As with the embodiment show in FIG. 1 the blocking piece comprises on its upper surface a concave receiving surface for accommodating a convex lens blank surface and on the opposite side a chuck-engaging portion. The example of FIG. 2 is basically composed of an annular glass insert 24 overmoulded by an injection moulded plastic material 22. Both components are translucent and in particular transparent and the overmoulded glass insert is positioned such that the surface 21 can maintain its configuration irrespective of forces applied to the tool engagement portion serving to fixedly hold ant to rotate or otherwise manipulate the block piece.

Obviously the example of Fig. 2 can serve again for supporting a lens blank in all kinds of processing steps whether those includes spin coating, edging, grinding or other working steps and compared to the embodiment of Fig. 1 it appears possible to have the blocking piece made as an integral one single piece part made of two distinct materials. This configuration might be beneficial in light of logistics, however the entire blocking piece then becomes non-reusable. In light of the fact that the example as shown in FIG. 2 is however conceivable at very low cost it could be contemplated to already fix the blocking piece to the lens blank in the lens blank manufacturing facility.

Once again and similarly to the first illustrated embodiment the person skilled in the art will realize that the junction surfaces 26 and 28 can be configured specifically to improve optical behaviour. It is to be noted that for ease of production it would be best to provide the optical characteristics on the overmoulded glass insert ring. It is clear that surfaces 26 and 28 can be provided with different optical characteristics as may be needed for instance the inner annual surface 28 might be highly polished for increasing the focusing capacity whereas the outer surface 26 might be slightly roughened in order to allow a higher portion of the light being scattered towards the peripheral portions of the blocking piece.

It is to be noted that the location and size of the ring material can be used to adjust the rigidity or stiffness of the blocking piece. E.g. if the mineral glass ring is extending from the area of the tool engagement up to the vicinity of the concave surface the block piece will be more rigid and stiff as compared to a block piece where a thick plastic layer exists between the lens blank and the glass ring. The different thermal characteristics do provide for another design feature. A glass ring close to the supporting surface will obviously render a thermal dissipation of heat within the blocked lens blank more effective.

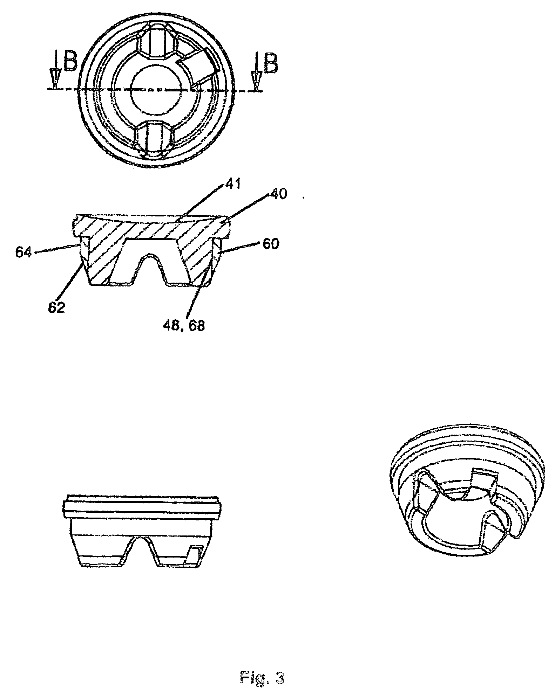

In FIG. 3 a second preferred embodiment according to the present invention is illustrated in a bottom view, a sectional view, a side view and a perspective view form below. In the bottom view one can realize the well-known standard configuration for allowing to have the blocking piece engaged with a corresponding apparatus or machine for working such as edging, polishing, grinding, coating etc. As can best be seen in the sectional view the here illustrated embodiment is comprised of a first element 40, made here from injection moulded plastic material. The element 40 is once again transparent or at least translucent and is provided on the top with the supporting surface 41 allowing to have a lens blank blocked thereto, preferably using a photo curable adhesive. In order to cope with the relatively high radial forces of the chucking process this embodiment is provided with an annular strengthening element 60 which is providing on its outer side with a cone shaped or chamfered guiding surface 62 and the tool engaging surface 64. The two elements made of different material do once more provide for an annular adjoining surface illustrated with reference signs 48 and 68. Once more the annular adjoining surfaces are capable of providing both optical characteristics and mechanical characteristics. The use of the strengthening ring 60 can successfully minimize any deformation in the plastic part and can thus avoid any deformation of the surface 41 which would in particular when thin lens blanks are worked also result in a distortion of the lens being worked. The ring shaped element 60 thus compensates any clamping forces caused by the collet chuck of the machine, which would otherwise distort the plastic block and the attached lens.

It is to be noted that the embodiment shown in FIG. 3 is illustrated to have a peripheral portion so as to accommodate additionally a plastic annular element as illustrated in FIG.1, however it is obvious to the person skilled in the art that the peripheral portion made of transparent plastic material allows directly for proper workability and therefore the shape of the blocking piece could basically also correspond to the shape of FIG. 2 i. e. the lens blank supporting surface can be either composed by a central blocking part and an annular surrounding ring or provided as a one piece element made of injection moulding material, possibly also including one or more embedded other material(s).

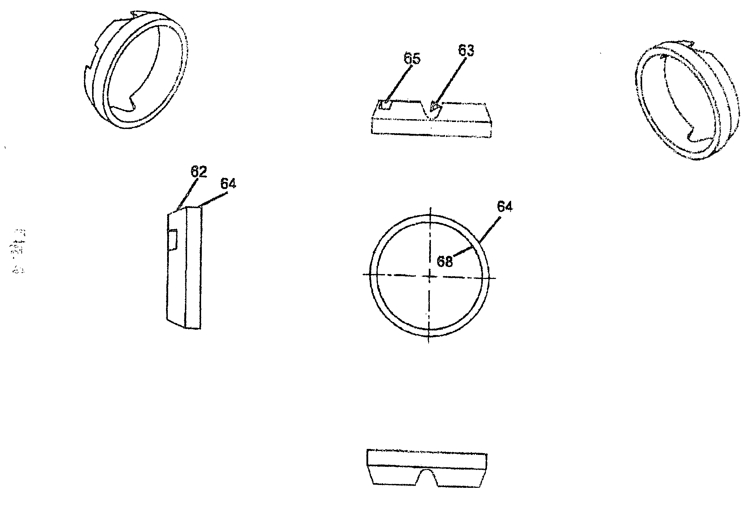

In FIG. 4 the ring shape reinforcing element is illustrated in more detail and one can realize that the ring shaped strengthening element 60 is preferably comprised of a torus axis-orienting drive notch 63 and a register 65 for allowing proper and easy engagement with the driving tool that is usually used such as defined in the previously mentioned German DIN. In the illustrated embodiment the strengthening ring 60 is made of a non-transparent and non-translucent material, e.g. made from aluminium or steel, it is however perfectly well conceivable to provide the stiffening ring 60 also in translucent or transparent material. Irrespective of the material chosen, it is possible to adapt the surface 68 for forming part of the adjoining annular surface with specific optical characteristics. E.g. if the stiffening ring is made of a metallic material it might be sufficient to polish the surface in order to attribute adequate optical reflective characteristic if such optical effect is desired. Obviously various other optical characteristics can be provided such as depolishing in order to enhance scattering of light etc.

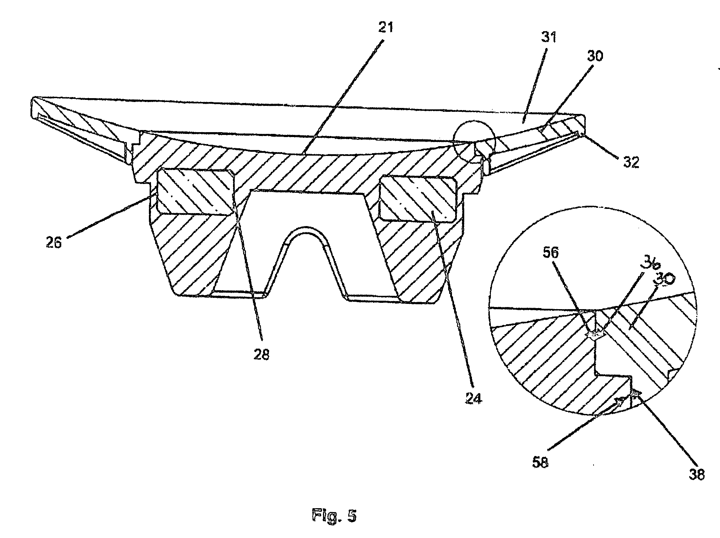

In FIG. 5 a third preferred embodiment is illustrated, basically combining the feature of the first preferred embodiment as illustrated in FIG. 1 and the example as illustrated in FIG. 2. Obviously and as already mentioned the various embodiments are combinable and even though the embodiment shown in FIG. 3 and 4 has not been illustrated in combination with the features of the first embodiment and the example of Fig. 2 the person skilled in the art should be aware that all three embodiments can be combined at will, using one, two or three of the suggested solutions. The embodiment in FIG. 5 is comprised of an over moulded glass ring 24 e. g. of mineral glass that is embedded into a transparent injection moulding material forming a reusable center block part provided on the top portion thereof with a concave surface 21 capable of supporting a lens blank that should be worked. Once again the lens blank is preferably fixed thereto using photo curable adhesive. Similarly as with the embodiment as shown in FIG. 1 a ring shaped peripheral portion is provided that during grinding and edging will support the perimeter of lens blank and that will be worked with the lens blank. The lens blank is at the same time supported and blocked via the center blocking element composed of the mineral glass ring 24 and the surrounding embedding material. This part of the block piece is providing for a reusable element of the blocking piece. As can thus be seen in the detail view the outer plastic ring part is engaged with the center block part in a manner to once again create an annular adjoining surface. The annular adjoining surface is providing both for beneficial optical characteristics and beneficial mechanical characteristics since the material can be specifically adapted for the best result. In the particular embodiment of FIG. 5 it is interesting to note that the use of two different plastic materials together with an overmoulded glass ring allows for a most advantageous thermal decoupling during the edging process as the blocking piece itself does present little thermal energy transmitting in a radial direction as prior art blocking pieces would do.

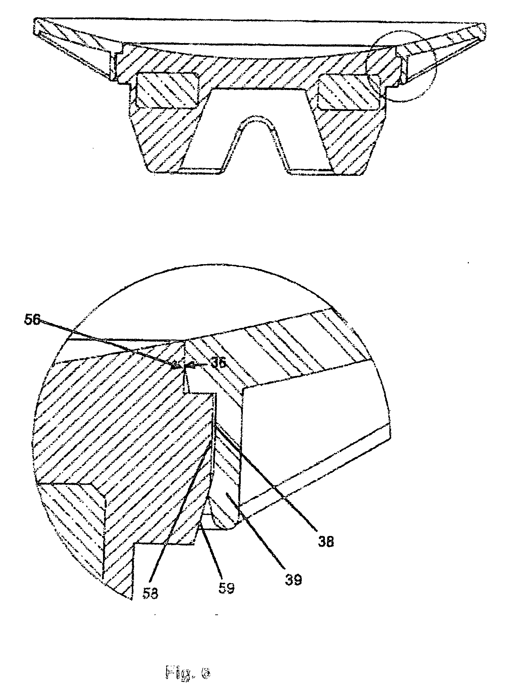

Finally, in FIG. 6 a further preferred embodiment is illustrated. In light of the fourth embodiment being very similar to the third embodiment the elements and components similar will not be described in detail again, it is however interesting to note on the detailed view that in contrast to the previous embodiments the outer plastic ring part is now snap fitted with the center element, again composed of an overmoulded glass ring with plastic material. However the person skilled in the art should realize that the center element could also be a full material mineral glass block such as in the first preferred embodiment. The snap engagement is provided in that the most lower portion of the ring shaped element is slightly protruding inwardly as illustrated at reference sign 39 in order to cooperate with a corresponding chamfer 59 on the central element.

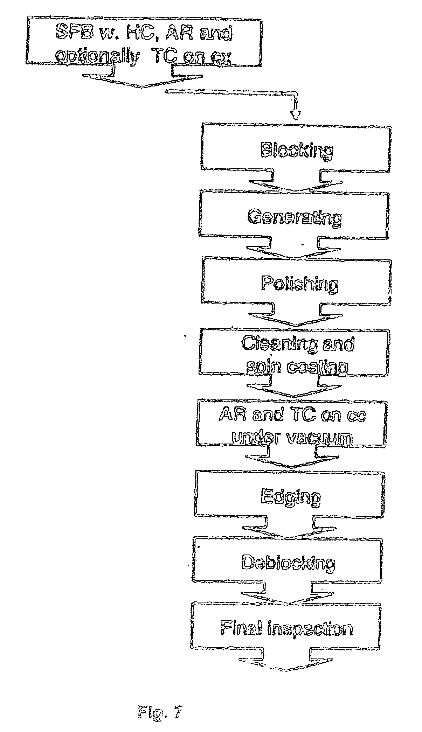

Finally, FIG. 7 shows by means of a flow chart the main process steps of a method for manufacturing spectacle lenses according to a prescription with the aid of a block piece as described above.

Basically, this method comprises the steps of: (i) blocking a spectacle lens blank B with its blocking face cx on the workpiece mounting face portion 61 of the block piece with the aid of a blocking material, (ii) processing the blocked spectacle lens blank on the second face and optionally the edge to obtain a processed spectacle lens, and (iii) deblocking the processed spectacle lens from the block piece, with the characterizing feature that the spectacle lens blank B remains on the proposed block piece throughout the whole processing stage or step (ii). According to FIG. 7, the latter stage or step generally comprises the following substeps: "Generating", i.e. machining of the blocked spectacle lens blank to give the second face cc a macrogeometry according to the prescription; "Polishing", i.e. fine machining of the blocked spectacle lens blank to give the second face cc the required microgeometry; cleaning the blocked spectacle lens blank that has been machined and fine machined; (optionally) spin (or dip) coating of the blocked spectacle lens blank in order to provide the second face cc with a hard coating HC, or a primer, or a primer and a hard coating; vacuum coating of the blocked spectacle lens blank B to provide an antireflection coating AR (normally consisting of four to seven layers made up of two to four materials with different refractive indices) and (optionally) a top coating TC such as a hydrophobic and/or oleophobic and/or dust repelling coating on the second face cc; and (optionally) edging of the blocked spectacle lens blank B to give the edge E the required geometry so that the processed spectacle lens, after deblocking and final inspection, is ready for insertion into a spectacle frame or a spectacle holder. Since the single processing substeps and the equipment used in those are well known to the person skilled in the art further explanations in this respect are not required at this point.

As can further be seen from FIG. 7, for the reasons indicated in the introductory portion of the description already, it is preferred that the blocking face cx of the spectacle lens blank B is fully finished prior to the above blocking step (i), including hard coating HC, antireflection coating AR and optionally top coating TC such as (super) hydrophobic and/or oleophobic and/or dust repelling coating, i.e. the blocking face cx of the spectacle lens blank B would carry the multilayer system prior to blocking.

A block piece for holding in particular a spectacle lens blank and its use are proposed, which comprises a basic body having a workpiece mounting face portion against which the workpiece can be blocked with a blocking material, and a clamping portion via which the blocked workpiece can be fixed in a machine/apparatus for processing it. The basic body consists of a material having a defined low water absorption and/or is sealed to at least reduce outgassing of water moisture under vacuum conditions, so that the block piece is adapted to be used also in vacuum coating processes. Alternatively or in addition, the clamping portion is adapted to be clamped by forces directed essentially perpendicular to the radial direction to cancel out each other and not deform the basic body, and/or the workpiece mounting face portion is provided with a predetermined amount of prism.

In summary, the invention can be said to provide for the very first time a blocking piece made of two different materials making up the body portion thereof (main body and supporting portion) with both of them being translucent and in particular transparent, wherein the concept of having an annular adjoining surface allows to cope with all mechanical and cost constraints while at the same time allowing an enhanced degree of freedom to optically design the blocking piece. In particular it has for a long time been believed to be rather impossible to have different materials when wishing to use photo curable adhesive. Shading problems and the like where considered to be predominant. In other wods hereinbefore multimaterial blocking pieces where exclusively opaque, whereas blocking pieces comprised of translucent or transparent material were exclusively made from a single material, exception made of course from elements as such not constituting the blocking piece body, such as springs, stud screws etc.. Apparently the before described embodiments are for illustrative purpose only and this scope of the protection should only be defined by the appended claims.

## Claims

1. Blocking piece having a workpiece mounting face portion for blocking a spectacle lensblank , the blocking piece comprising at least two material (30,50) having different rigidity/stiffness/hardness, whereas both materials define an annular junction surface for one material with respect to the other material, wherein a first one (30) of the at least two materials is formed to have an annular shape at least in part surrounding the second one (50) of the at least two materials, so that the workpiece mounting face portion comprises a first surface (31) having the first one of the at least two materials and a second surface (51) having the second one of the at least two materials **characterized in that** both materials are translucent and the workpiece mounting face portion defines a preconfigured un-deformable shape for receiving said spectacle lens blank thereon.

2. Blocking piece according to claim 1, wherein both materials have different optical properties.

3. Blocking piece according to claim 1 or 2 wherein at least one, in particular both materials are transparent.

4. Blocking piece according to any one of the preceding claims, wherein one or both materials have similar optical properties compared to the lens to be blocked.

5. Blocking piece according to any one of the preceding claims, wherein one material is fixedly attached, in particular embedded into the other material.

6. Blocking piece according to any one of the preceding claims, wherein the perimeter of the blocking piece is made to conform in rigidity/stiffness/hardness the lens to be blocked.

7. Blocking piece according to any one of the preceding claims, comprising at least one of an annular glass insert (24) over moulded in the second material and radial extending ribs (34) extending in the first material.

8. Method for manufacturing spectacle lenses using a blocking piece according to any one of the preceding claims, comprising the steps of
(i) blocking a spectacle lens blank with its blocking face on the workpiece mounting face portion of the blocking piece with the aid of a blocking material,
(ii) processing the blocked spectacle lens blank on the second face and optionally the edge to obtain a processed spectacle lens, and
(iii) deblocking the processed spectacle lens from the block piece, with the characterizing feature that the spectacle lens blank remains on and lies against the workpiece mounting face portion throughout the whole processing stage or step (ii).

9. Method according to claim 8, wherein the blocking material used to block the spectacle lens blank is already present in the blocking piece.

## Patentansprüche

1. Blockierstück aufweisend einen Werkstückbefestigungsflächenabschnitt zum Blockieren eines Brillenglasrohlings, das Blockierstück umfassend zumindest zwei Materiallien mit unterschiedlicher Festigkeit/Steifigkeit/Härte, wobei beide Materialien (30, 50) eine ringförmige Verbindungsfläche für ein Material hinsichtlich des anderen Materials definieren, wobei ein erstes (30) von den zumindest zwei Materialien ausgebildet ist, um eine ringförmige Gestalt aufzuweisen, die zumindest teilweise das zweite (50) der zumindest zwei Materialien umgibt, derart, dass der Werkstückmontageflächenabschnitt eine erste Fläche (31), aufweisend das erste von den zumindest zwei Materialien, und eine zweite Fläche (51), aufweisend das zweite von den zumindest zwei Materialien, umfasst, **dadurch gekennzeichnet, dass** beide Materialien transluzent sind und der Werkstückmontageflächenabschnitt eine vorkonfigurierte unverformbare Gestalt zur Aufnahme des Brillenglasrohlings daran definiert.

2. Blockierstück nach Anspruch 1, bei welchem beide Materialien unterschiedliche optische Eigenschaften aufweisen.

3. Blockierstück nach Anspruch 1 oder 2, bei welchem zumindest ein, insbesondere beide Materialien, transparent sind.

4. Blockierstück nach einem der vorhergehenden Ansprüche, bei welchem ein oder beide Materialien ähnliche optische Eigenschaften im Vergleich zu der zu blockierenden Linse aufweist.

5. Blockierstück nach einem der vorhergehenden Ansprüche, bei welchem ein Material fest angebracht insbesondere in dem anderen Material eingebettet ist.

6. Blockierstück nach einem der vorhergehenden Ansprüche, bei welchem der Umfang des Blockierstücks derart hergestellt ist/wird, um der Festigkeit/Steifheit/Härte der zur blockierenden Linse zu entsprechen.

7. Blockierstück nach einem der vorhergehenden Ansprüche, weiter umfassend zumindest ein von einem ringförmigen Glaseinsatz (24), welches in dem zweiten Material angespritzt ist, und sich radial erstreckende Rippen (34), welche sich in das erste Material erstrecken.

8. Verfahren zu Herstellung von Brillengläser unter Verwendung eines Blockierstücks nach einem der vorhergehenden Ansprüche, umfassend die folgenden Verfahrensschritte:
(i) Blockieren eines Brillenglasrohlings mit seiner Blockierfläche an dem Werkstückbefestigungsflächenabschnitt des Blockierstücks mit Hilfe eines Blockiermaterials;
(ii) Verarbeiten des blockierten Brillenglasrohlings auf der zweiten Fläche und optional des Randes, um ein verarbeitetes Brillenglas zu erhalten, und
(iii) Deblockieren des verarbeiteten Brillenglases aus dem Blockierstück, **dadurch gekennzeichnet, dass** der Brillenglasrohling auf dem Werkzeugbefestigungsflächenabschnitt während der gesamten Verarbeitungsstufe oder des Schritts (ii) verbleibt und dagegen anliegt.

9. Verfahren nach Anspruch 8, bei welchem das Blockiermaterial, welches verwendet wird um den Brillenglasrohling zu blockieren, bereits in dem Blockierstück vorhanden ist.

## Revendications

1. Pièce de blocage ayant une partie de face de montage de pièce de travail pour bloquer une ébauche de verres ophtalmiques pour lunettes, la pièce de blocage comprenant au moins deux matériaux (30; 50) ayant une rigidité/dureté différente, dans lequel les deux matériaux définissent une surface de jonction annulaire pour un matériau par rapport à l'autre matériau, dans lequel un premier (30) des au moins deux matériaux est formé pour avoir une forme annulaire entourant au moins en partie le deuxième (50) des au moins deux matériaux, de sorte que la partie de phase de montage de pièce de travail comprend une première surface (31) ayant le premier des au moins deux matériaux et une deuxième surfaces (51) ayant le deuxième desdits au moins deux matériaux, **caractérisé en ce que** les deux matériaux sont translucides et la partie de phase de montage de travail définit une forme préconfigurée non déformable pour recevoir ladite ébauche de verres ophtalmiques pour lunettes sur celles-ci.

2. Pièce de blocage selon la revendication 1, dans laquelle les deux matériaux ont des propriétés optiques différentes.

3. Pièce de blocage selon la revendication 1 ou 2, dans lequel au moins l'un, en particulier des matériaux sont transparents.

4. Pièce de blocage selon l'une quelconque des revendications précédentes, dans lequel un ou les deux matériaux ont des propriétés optiques similaires comparées aux verres ophtalmiques à bloquer.

5. Pièce de blocage selon l'une quelconque des revendications précédentes, dans lequel un matériau est attaché fixement, en particulier compris à l'intérieur de l'autre maténau.

6. Pièce de blocage selon l'une quelconque des revendications précédentes, dans lequel le périmètre de la pièce blocage est fait pour se conformer à la rigidité/dureté du verre ophtalmique à bloquer.

7. Pièce de blocage selon l'une quelconque des revendications comprenant au moins l'un d'un insert en verre annulaire (24) surmoulé sur le deuxième matériau, et des nervures s'étendant radialement (34) s'entendant dans le premier matériau.

8. Procédé de fabrication de verres ophtalmiques de lunettes en utilisant une pièce de blocage selon l'une quelconque des revendications précédentes, comprenant les étapes suivantes
i. blocage d'une ébauche de verre ophtalmique de lunette avec sa face de blocage sur la partie de face de montage de pièce de travail de la pièce de blocage à l'aide d'un matériau de blocage,
ii. traitement de l'ébauche de verre ophtalmique de lunette bloquée sur la deuxième face, et optionnellement du rebord, pour obtenir un verre ophtalmique de lunette traité, et
iii. déblocage du verre de lunette traité par rapport à la pièce de blocage, avec la caractéristique que l'ébauche de verre de lunette reste sur et contre la partie de phase de montage pièce de travail lors de toute l'étape de traitement ou lors de l'étape ii.

9. Procédé selon la revendication 8, dans lequel le matériau de blocage utilisé pour bloquer l'ébauche de verre ophtalmique de lunette est déjà présent dans la pièce de blocage.
